# EUROPÄISCHE PATENTSCHRIFT

(11) **EP 0 781 738 B1**
(45) Veröffentlichungstag und Bekanntmachung des Hinweises auf die Patenterteilung: **19.08.1998**
(21) Anmeldenummer: 96120140.7
(22) Anmeldetag: 16.12.1996
(51) Int. Cl.: C04B 41/50, C04B 35/14

(54) **Zinnbadbodenstein, und Verfahren zu seiner Herstellung**
Bottom block in a solder plating bath, and a method for its manufacture
Plaque de fond de bain d'étain et procédé pour sa préparation

(30) Priorität: 28.12.1995 DE 19549057
(43) Veröffentlichungstag der Anmeldung: 02.07.1997
(73) Patentinhaber: VGT Industriekeramik GmbH, 37244 Grossalmerode (DE)
(72) Erfinder: Petschauer, Hans, 37247 Grossalmerode (DE)
(74) Vertreter: Patentanwälte Rehberg + Hüppe

(56) Entgegenhaltungen:
- DE-A- 4 409 111
- GB-A- 1 268 128
- US-A- 5 407 875

## Beschreibung

Die Erfindung betrifft einen großformatigen Schamottestein, insbesondere Zinnbadbodenstein, aus einem Werkstoff des Systems Al₂O₃ - SiO₂, aus einem blockartigen Grundkörper mit einer mit dem Zinnbad in Kontakt kommenden Oberfläche. Bei solchen Zinnbadbodensteinen handelt es sich um großformatige Schamottesteine, die streng quaderförmige Gestalt mit einer dem Zinnbad abgekehrten Oberfläche, vier Seitenflächen und einer mit dem Zinnbad nicht in Kontakt kommenden Oberfläche aufweisen. Sämtliche sechs Flächen dieser großformatigen Schamottesteine werden in einem Schleifvorgang nach dem Brennen auf Endmaß fertig bearbeitet, wobei sie die gewünschten Abmessungen erhalten.

Solche großformatigen Schamottesteine, die der Auskleidung einer Wanne für ein Zinnbad dienen und aus einem Werkstoff des Systems Al₂O₃ - SiO₂ bestehen, sind aus der DE 42 06 734 C2 bekannt. Der hier interessierende Teil der Glasherstellungsanlage besitzt im unteren Bereich eine Stahlwanne, die mit den großformatigen Schamottesteinen ausgekleidet ist. Dabei entsteht eine Wanne, die mit flüssigem Zinn gefüllt wird. Auf das Zinn wird das schmelzflüssige Glas aufgegossen, welches auf der Oberfläche des Zinnbades ausläuft und als dünnes, breites Band über das Zinnbad abgezogen wird. Auf diese Weise wird bekanntlich Flachglas hergestellt. Das Flachglas enthält ca. 15 % Na₂O. An der Berührungsfläche zwischen dem Glas und dem flüssigen Zinn diffundiert Na₂O in das flüssige Metall. Im Zinnbad liegen nun Natrium und atomarer Sauerstoff gelöst vor. Die Löslichkeit von Natrium und atomarem Sauerstoff in Zinn ist eine Funktion der Temperatur. Bei der Herstellung von Flachglas herrschen in der Anlage je nach Meßort Temperaturen in der Größenordnung von 1200 °C - 600 °C. Aufgrund der thermisch und mechanisch induzierten Strömungen des flüssigen Zinns im Zinnbad werden mit Natrium beladene Volumenteile des Zinns an die mit dem Zinnbad in Kontakt kommende Oberfläche des blockartigen Grundkörpers des Schamottesteins herangetragen. So kommt es zu einem Austausch von Natrium zwischen dem Zinn und dem feuerfesten Werkstoff des Schamottesteins. Das atomare Natrium dringt in das feuerfeste Material ein und reagiert dort zuerst mit dem Siliziumdioxid der Glasphase der Schamottesteine unter Bildung von Natriumoxid. Durch die Reduktion von siliziumdioxidhaltigen Phasen erfahren die reduzierten Anteile des Schamottesteins eine graue bis schwarze Färbung.

Die bekannten Schamottesteine, die in derartigen Glasherstellungsanlagen eingesetzt werden, können eine Länge von 1000 mm, eine Breite von 600 mm und eine Höhe von 300 mm aufweisen. Sie werden aus Schamottekörnern unterschiedlicher Kornverteilung, Ton und Alkalialumosilikat aufgebaut. Nach dem Brand liegen mineralogisch gesehen hauptsächlich Mullit, etwas Cristobalit und eine Glasphase vor. Der Anteil an Glasphase eines solchen Schamottesteins wird durch den Gehalt an Natrium- und Kaliumoxid bestimmt. Ebenso beeinflussen diese Oxide wesentlich die chemische Zusammensetzung der Glasphase. Diese chemische Zusammensetzung entscheidet darüber, welche Alkalialumosilikate - Nephelin oder Albit - bei dem Angriff von metallischem Natrium in oberflächennahen Schichten des Schamottesteins gebildet werden. Der thermische Ausdehnungskoeffizient von Nephelin ist ca. vierfach größer als der Ausdehnungskoeffizient von Mullit. Es kommt daher zu einer Vergrößerung und zu einem Wachsen der Schichten im Schamottestein, die benachbart zu der mit dem Zinnbad in Kontakt kommenden Oberfläche sind. Dabei stützen sich diese Schichten infolge der streng quaderförmigen Gestalt der Schamottesteine im Verbund aneinander ab. Es entstehen entsprechende Spannungen.

Andererseits ist es erforderlich, die Fugen zwischen den auch im Bereich ihrer Seitenflächen glattgeschliffenen Oberflächen der Schamottesteine im Verband möglichst klein und damit dicht zu halten, damit das flüssige Zinn nicht durch diese Fugen nach unten hindurchtritt, wobei es zu einer Zerstörung der die Schamottesteine aufnehmenden Stahlwanne kommen kann. Da sich ein Eindringen des flüssigen Zinns in die Fuge nicht mit Sicherheit und nicht in allen Fällen vermeiden läßt, wird die Stahlwanne gekühlt, um durchdringendes Zinn in den festen Zustand zu überführen.

Durch die Volumenvergrößerung der Schichten im Bereich der mit dem Zinnbad in Kontakt kommenden Oberfläche der Schamottesteine kommt es zu Abplatzungen im Bereich dieser Schichten, die sich bevorzugt in den Eck- und Kantenbereichen der mit dem Zinnbad in Kontakt kommenden Oberfläche bilden. Da das keramische Material des Schamottesteins ein geringeres spezifisches Gewicht als Zinn aufweist, kommt es zu einem Aufschwimmen dieser abgeplatzten Bestandteile der Schamottesteine im Zinnbad. Dies kann zu erheblichen Produktionsstörungen bei der Glasherstellung führen.

Gemäß GB-A-12 68 128 ist es bekannt, keramisches Material gegen den Angriff von Metallschmelzen durch eine alkalisilikat-haltige Beschichtung zu schützen.

Der Erfindung liegt die Aufgabe zugrunde, einen Zinnbadbodenstein der eingangs beschriebenen Art bereitzustellen, bei dem die Feldspatbildung oder Feldspatvertreterbildung erheblich reduziert ist, um Abplatzerscheinungen bei seinem Einsatz als Auskleidung für ein Zinnbad entgegenzuwirken.

Erfindungsgemäß wird dies bei dem Zinnbadbodenstein der eingangs beschriebenen Art dadurch erreicht, daß die mit dem Zinnbad in Kontakt kommenden Oberfläche des blockartigen Grundkörpers eine Alkalisilikat enthaltende Beschichtung aufweist, um in der Beschichtung im Vergleich zum Werkstoff des Schamottesteins durch ein verringertes Al₂O₃-Angebot und ein vergrößertes Alkali- und Kieselsäure-Angebot eine zur Glasurbildung neigende und als Fänger für Na aus dem Zinnbad wirkende Sperrschicht auf der Oberfläche des Grundkörpers zu bilden.

Die Erfindung geht damit von dem Gedanken aus, durch die Anordnung einer Beschichtung auf der mit dem Zinnbad in Kontakt kommenden Oberfläche des Grundkörpers, also zumindest auf einer Hauptfläche oben und gfs. auch über Seitenflächenbereiche des Grundkörpers hinweg, aus der Beschichtung letztlich eine dünne Glasur zu bilden. Die Alkalien werden als Flußmittel genutzt, insbesondere in Verbindung mit einem erhöhten Anteil SiO₂. Die Beschichtung kann in ihrer einfachsten Form aus einem Anstrich, einem Auftrag mit abschließendem Abrakeln, einem Aufsprühen od. dgl. bestehen. Die aus der Beschichtung entstehende Glasur soll nur Bruchteile eines mm dick sein, aber andererseits in den Poren der Oberfläche festhaftend verankert sein. Die Glasurbildung wird begünstigt bzw. ermöglicht durch ein Überangebot an Alkali und Kieselsäure in der dünnen Schicht der Beschichtung und erreicht damit selbst auch nur eine geringe Dicke, die klein genug ist, um Ablöse- und Aufschwimmerscheinungen von Glasurstücken - sog. Kaulquappen - im Zinnbad zu vermeiden. Die Beschichtung und die sich daraus bildende Glasur wirken als Fänger und als Sperrschicht für atomares Natrium, sodaß dieses aus dem Zinnbad zwar in die Schicht der Beschichtung oder Glasur, nicht aber in tieferliegende Matrixbereiche des Werkstoff des Grundkörpers einwandern kann. Die Wirkung der Sperrschicht beruht auch darauf, daß bei der Aufbringung der Beschichtung offene Poren ausgefüllt und insoweit eine mechanische Sperrwirkung erreicht wird. Gleichzeitig wird damit die Beschichtung in den Poren der Oberfläche des Grundkörpers festhaftend verankert. Durch die Beschränkung der Beschichtung auf eine dünne Schicht werden Schichtabmessungen vermieden, wie sie für abplatzende und im Zinnbad aufschwimmende Schichtstücke im Stand der Technik typisch sind. An sich äußert sich der Angriff des atomaren Natriums aus dem Zinnbad in einer Nephelinbildung, sodaß der Einbau von Natrium in Form von Alkalien in einer Beschichtung zunächst unsinnig erscheint. Durch die Begünstigung der Glasurbildung jedoch ergibt sich letztlich die vorteilhafte dünne Sperrschicht, die die schädlichen Auswirkungen von tieferliegenden Schichten des Grundkörpers fernhält.

Wenn die Erfindung in Verbindung mit einer umlaufenden Phase am Grundkörper des Schamottesteins eingesetzt wird, erstreckt sich die Beschichtung auch umlaufend über die gesamte mit dem Zinnbad in Kontakt kommende Oberfläche des Schamottesteins. Durch die Phase wird weiterhin vorteilhaft erreicht, daß der Aufbau von Spannungen im Verband verlegter Schamottesteine gleichsam mit Abstand und unterhalb der wesentlichen großen, mit dem Zinnbad in Kontakt kommenden Oberfläche der Schamottesteine gelegt wird. In der mit dem Zinnbad in Kontakt kommenden Oberfläche können auch zusätzlich eine oder mehrere Nuten angeordnet sein, die die großformatige Oberfläche in mehrere kleinformatige Oberflächen unterteilen. Durch diese Maßnahme, die insbesondere bei sehr großen Steinen angewendet werden kann, wird die dann auch relativ große, mit dem Zinnbad in Kontakt kommende Oberfläche des Schamottesteins in mehrere vergleichsweise kleinere Oberflächen unterteilt, die sich infolge der Nutenanbringung nicht mehr aneinander abstützen. Die Beschichtung erstreckt sich auch über diese Nuten. Es ist jedoch auch möglich, auf die umlaufende Phase zu verzichten und nur Nuten in der mit dem Zinnbad in Kontakt kommenden Oberfläche des Grundkörpers des Schamottesteins anzuordnen und auch dort die Beschichtung aufzubringen. Dabei erscheint es sinnvoll, sich kreuzende Nuten kantennah anzuordnen, damit die sich im Verband aneinander abstützenden Flächen etwa gleichgroße Größe erhalten wie die im Mittelbereich der Oberfläche angeordneten Flächen.

Die Beschichtung kann einerseits Alkalisilikat und andererseits Alumosilikat in feinverteilter Form aufweisen. Damit ist es möglich, die Viskosität der sich bildenden Glasurschicht zu steigern und damit zähflüssiger einzustellen, um Ablöseerscheinungen in Form des bekannten Kaulquappeneffektes entgegenzuwirken.

Die Beschichtung kann Wasserglas oder eine Wasserglas-Lösung, insbesondere Natronwasserglas und/oder Kaliwasserglas, enthalten. Auch Mischungen sind anwendbar.

Die Beschichtung sollte möglichst dünn, maximal mit einer Schichtdicke von 1 mm, auf die mit dem Zinnbad in Kontakt kommenden Oberfläche (3) des blockartigen Grundkörpers (2) aufgebracht werden bzw. sein. Die Beschichtung wird an der Stelle offener Poren tiefer in die Oberfläche des Grundkörpers eindringen als an anderen Stellen. Ein Abrakeln oder Abstreifen der aufgetragenen Masse der Beschichtung ist sinnvoll, um die Beschichtung möglichst dünn zu halten.

Das Alkalisilikat kann mit einem Anteil von etwa 50 bis 60 Gew.-% und das Alumosilikat mit einem Anteil von etwa 50 bis 40 Gew.-% in der Beschichtung vorgesehen sein. Die Beschichtung kann zusätzlich zu dem Alkalisilikat SiO₂ enthalten, um die Zusammensetzung der Glasur zu variieren. Die Schamottesteine können unterschiedlich, je nach ihrem Einsatzort in der Glasherstellungsanlage, beschichtet werden, um beispielsweise die Glasur bereits bei relativ niedrigen Temperaturen, etwa bereits bei 600 °C am Ende der Anlage, oder aber erst bei relativ hohen Temperaturen, etwa bei 1000 °C oder 1200 °C im Mittelbereich der Anlage zu bilden. Das SiO₂ kann in Form von Kieselsol oder als pyrogene Kieselsäure vorgesehen sein.

Der blockartige Grundkörper kann zusätzlich zu der Beschichtung eine Phase aufweisen, die um die mit dem Zinnbad in Kontakt kommende Oberfläche umlaufend vorgesehen ist, wobei sich die Beschichtung mindestens auch über die von der Phase gebildeten Seitenflächen des Grundkörpers erstreckt. In der mit dem Zinnbad in Kontakt kommenden Oberfläche können auch zusätzlich eine oder mehrere Nuten angeordnet sind, die die großformatige Oberfläche in mehrere kleinformatige Oberflächen unterteilen.

Ein erfindungsgemäßes Verfahren zur Herstellung eines solchen Schamottesteins sieht vor, daß ein blockartiger Grundkörper aus einem Werkstoff des Systems Al₂O₃ - SiO₂ geformt, getrocknet, gebrannt und auf Endmaß geschliffen und nach dem Schleifen des Grundkörpers auf Endmaß auf die mit dem Zinnbad in Kontakt kommenden Oberfläche des Grundkörpers eine Alkalisilikat enthaltende Beschichtung aufgebracht wird. Das Aufbringen der Beschichtung erfolgt etwa in Form eines Anstrichs, eines Aufwalzens, eines Aufsprühens o. dgl..

Die Beschichtung kann so aufgebracht und der Schamottestein so eingesetzt werden. Es ist aber auch möglich, die Beschichtung auf der mit dem Zinnbad in Kontakt kommenden Oberfläche des Grundkörpers einzubrennen. Dies geschieht durch eine entsprechende Temperaturbehandlung. Dies ist besonders sinnvoll, wenn Schamottesteine erzeugt werden sollen, die vor ihrem Einbau in einer Glasherstellanlage noch längere Zeit einem Feuchtigkeitseinfluß ausgesetzt sind.

Die Erfindung wird anhand bevorzugter Ausführungsbeispiele weiter erläutert und beschrieben. Es zeigen:
- Fig. 1: eine perspektivische Darstellung eines Schamottesteins in einer ersten Ausführungsform, und
- Fig. 2: eine weitere Ausführungsform des Schamottesteins.

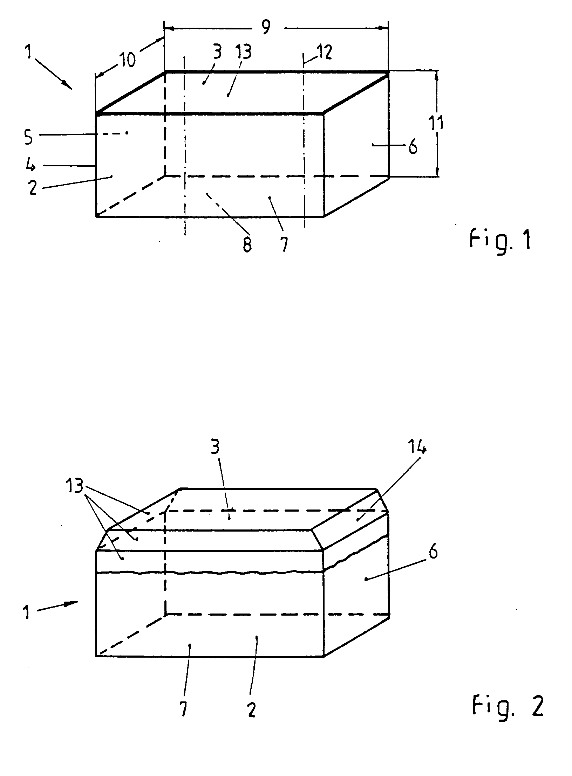

Der in Fig. 1 dargestellte Schamottestein 1 besitzt einen Grundkörper 2 in Form eines Quaders oder eines Parallelepipeds. Im Einzelnen besitzt der Grundkörper sechs Oberflächen, nämlich eine mit dem Zinnbad in Kontakt kommende Oberfläche 3, vier Seitenflächen 4, 5, 6, 7, sowie eine Grundfläche 8, die der Stahlwanne der Schmelzanlage zugekehrt angeordnet ist, wenn die Wanne mit derartigen Schamottesteinen 1 ausgekleidet ist. Der Schamottestein 1 weist eine Länge 9, eine Breite 10 und eine Höhe 11 auf. Da es sich um einen großformatigen Schamottestein 1 handelt, beträgt die Länge 9 etwa 1000 mm, die Breite 10 etwa 600 mm und die Höhe 11 etwa 300 mm. Es versteht sich, daß solche großformatigen Schamottesteine 1 auch mit abweichenden Abmessungen hergestellt werden. Der Schamottestein 1 weist weiterhin der Höhe 11 nach durchgehende Löcher auf, die hier nur durch Mittellinien 12 angedeutet sind. Diese Löcher dienen dem Verankern des Schamottesteins 1 an der Stahlwanne, um ein Aufschwimmen des Schamottesteins 1 im Zinnbad zu verhindern.

Die dem Zinnbad zugekehrte Oberfläche 3 ist mit einer Beschichtung 13 versehen. Die Beschichtung 13 kann als Anstrich, als Auftrag oder auch durch Aufsprühen aufgebracht werden. Sie erstreckt sich mindestens über den vollen Bereich dieser Oberfläche 3. Es ist unschädlich, wenn sich die Beschichtung auch noch über die Kantenbereiche hinweg erstreckt. Wesentlich ist, daß die gesamte Oberfläche 3 erfaßt wird.

Bei der in Fig. 2 dargestellten Ausführungsform weist der Grundkörper 2 des Schamottesteins 1 umlaufend um die mit dein Zinnbad in Kontakt kommende Oberfläche 3 im Bereich seiner Kante eine Phase 14 auf, also eine schräge Abflachung, die sich nur über einen Teil der vier Seitenflächen 4, 5, 6 und 7 erstreckt. Die Phase 14 ist umlaufend um die Oberfläche 3 angeordnet, und zwar an allen vier Kanten. Sie läßt sich insbesondere durch einen Schleifvorgang an dem ansonsten parallelepipedförmigen Grundkörper 2 mit rechten Winkeln herstellen. Die Phase 14 kann in Richtung der Höhe 11 des Grundkörpers eine Tiefe von etwa 5 - 20 mm und in Richtung der Länge 9 bzw. der Breite 10 eine Breite von etwa 1 bis 8 min besitzen, immer gemessen von der vor der Abarbeitung der Phase 14 sich ergebenden Kante zwischen den jeweiligen Flächen. Auch hier ist die Beschichtung 14 vorgesehen. Sie erstreckt sich über die dein Zinnbad zugekehrte Oberfläche 3 bis in den angedeuteten Bereich der Seitenflächen 4, 5, 6 und 7 hinein, wobei die Phase 14 von der Beschichtung 13 ebenfalls vollständig abgedeckt wird.

Die Herstellung eines solchen Schamottesteins 1 wird anhand zweier Ausführungsbeispiele verdeutlicht:

### Beispiel 1:

Der Schamottestein 1 wird in bekannter Weise geformt, verdichtet, als Grünling getrocknet und gebrannt. Anschließend erfolgt die dimensionsmäßige Bearbeitung auf Endmaß, insbesondere durch einen Schleifvorgang. Der Schamottestein 1 erhält zumindest auf seiner dem Zinnbad zugekehrten Oberfläche 3 einen Anstrich mit einer Wasserglas-Lösung oder mit einem Gemisch aus Wasserglas und Aluminiumsilikaten. Die Aluminiumsilikate werden feinstgemahlen mit einer Korngröße < 100 µm eingesetzt. Der Anstrich kann mit einem Pinselauftrag, unter Verwendung einer Spachtel o. dgl. erfolgen. Zweckmäßig schließt sich an den Auftrag ein Abziehvorgang mit einem Lineal oder einem ähnlichen Werkzeug an, um den Auftrag der Beschichtung 13 möglichst dünn zu halten. Die Wasserglaslösung oder das Gemisch dringt dabei insbesondere in die offenen Poren des Grundkörpers 2 ein. Die Eindringtiefe kann an manchen Stellen etwa 1 mm erreichen. Im Anschluß daran schließt sich ein Trocknungsvorgang, beispielsweise bei 100 °C, an, um den Anstrich auf der Oberfläche 3 zu fixieren. In dieser Form kann der Schamottestein 1 in die Stahlwanne der Glasherstellungsanlage eingebaut werden. Je nach seinem Anbringungsort wird er im Betrieb eine Oberflächentemperatur annehmen, die in der Größenordnung zwischen 1.200 und 600 °C liegt. Dabei wandert atomares Natrium aus dem Zinnbad in den Anstrich bzw. die Beschichtung ein. Es bildet sich durch den Temperatureinfluß eine hochviskose Glasschicht, die als Sperrschicht dünn bleibt und einerseits eine Porenversiegelung erbringt. Andererseits ist die sich aus der Besichtung bildende Glasur durch ihre Verankerung in den Poren auf der Oberfläche festhaftend. Durch im Überfluß angebotene Kieselsäure und die bereits in der Beschichtung 13 vorhandenen Alkalien wird sehr schnell ein die Glasurbildung begünstigender Bereich geschaffen, in dem aus dem Zinnbad einwanderndes Natrium gefangen und in die Glasur eingebaut wird. Da die Glasur insoweit eine Sperrschicht bildet, wird die Matrix des Grundkörpers 2 von Natrium weitgehend geschützt.

### Beispiel 2:

Die Herstellung des Schamottesteins 1 erfolgt zunächst wie in Beispiel 1 beschrieben. Nach dem Aufbringen der Beschichtung 13 in Form des Anstriches schließt sich jedoch ein Einbrennvorgang, maximal bei etwa 1.000 °C, an. Damit wird das Natriumsilikat angeschmolzen, jedoch so, daß keine Reaktion mit der Matrix des Grundkörpers eintritt. Ein solcher Einbrennvorgang ist vorteilhaft, wenn die Schamottesteine vor dem Einbau in die Stahlwanne des Zinnbades länger einer feuchten Atmosphäre ausgesetzt sind. Durch den Einbrennvorgang entsteht bereits die Glasur, die weitgehend unempfindlich gegen Feuchtigkeit ist.

### BEZUGSZEICHENLISTE

- 1: - Schamottestein
- 2: - Grundkörper
- 3: - Oberfläche
- 4: - Seitenfläche
- 5: - Seitenfläche
- 6: - Seitenfläche
- 7: - Seitenfläche
- 8: - Grundfläche
- 9: - Länge
- 10: - Breite
- 11: - Höhe
- 12: - Mittellinie
- 13: - Beschichtung
- 14: - Phase

## Patentansprüche

1. Zinnbadbodenstein aus einem Werkstoff des Systems Al₂O₃ - SiO₂, aus einem blockartigen Grundkörper (2) mit einer mit dem Zinnbad in Kontakt kommenden Oberfläche (3), **dadurch gekennzeichnet**, daß die mit dem Zinnbad in Kontakt kommenden Oberfläche (3) des blockartigen Grundkörpers (2) eine Alkalisilikat enthaltende Beschichtung (13) aufweist, um in der Beschichtung im Vergleich zum Werkstoff des Schamottesteins (1) durch ein verringertes Al₂O₃-Angebot und ein vergrößertes Alkali- und Kieselsäure-Angebot eine zur Glasurbildung neigende und als Fänger für Na aus dem Zinnbad wirkende Sperrschicht auf der Oberfläche (3) des Grundkörpers (2) zu bilden.

2. Zinnbadbodenstein nach Anspruch 1, **dadurch gekennzeichnet**, daß die Beschichtung (13) Alkalisilikat und Alumosilikat in feinverteilter Form aufweist.

3. Zinnbadbodenstein nach Anspruch 1 oder 2, **dadurch gekennzeichnet**, daß die Beschichtung (13) Wasserglas oder eine Wasserglas-Lösung, insbesondere Natronwasserglas und/oder Kaliwasserglas, enthält.

4. Zinnbadbodenstein nach einem der Ansprüche 1 bis 3, **dadurch gekennzeichnet**, daß die Beschichtung (13) möglichst dünn, maximal mit einer Schichtdicke von 1 mm, auf die mit dem Zinnbad in Kontakt kommenden Oberfläche (3) des blockartigen Grundkörpers (2) aufgebracht ist.

5. Zinnbadbodenstein nach Anspruch 2, **dadurch gekennzeichnet**, daß das Alkalisilikat mit einem Anteil von etwa 50 bis 60 Gew.-% und das Alumosilikat mit einem Anteil von etwa 50 bis 40 Gew.-% in der Beschichtung (13) vorgesehen ist.

6. Zinnbadbodenstein nach einem der Ansprüche 1 bis 5, **dadurch gekennzeichnet**, daß die Beschichtung (13) zusätzlich zu dem Alkalisilikat SiO₂ enthält.

7. Zinnbadbodenstein nach Anspruch 6, **dadurch gekennzeichnet**, daß das SiO₂ in Form von Kieselsol oder als pyrogene Kieselsäure vorgesehen ist.

8. Zinnbadbodenstein nach den Ansprüchen 2 bis 4, **dadurch gekennzeichnet**, daß der blockartige Grundkörper (2) eine Phase (14) aufweist, die um die mit dem Zinnbad in Kontakt kommende Oberfläche (3) umlaufend vorgesehen ist, und daß sich die Beschichtung (13) mindestens auch über die von der Phase gebildeten Seitenflächen (4, 5, 6, 7) des Grundkörpers (2) erstreckt.

9. Verfahren zur Herstellung eines Zinnbadbodensteins nach einem oder mehreren der Ansprüche 1 bis 8, indem ein blockartiger Grundkörper (2) aus einem Werkstoff des Systems Al₂O₃ - SiO₂ geformt, getrocknet, gebrannt und auf Endmaß geschliffen wird, **dadurch gekennzeichnet**, daß nach dem Schleifen des Grundkörpers (2) auf Endmaß auf die mit dem Zinnbad in Kontakt kommenden Oberfläche (3) des Grundkörpers (2) eine Alkalisilikat enthaltende Beschichtung (13) aufgebracht wird.

10. Verfahren nach Anspruch 9, **dadurch gekennzeichnet**, daß die Beschichtung (13) auf der mit dem Zinnbad in Kontakt kommenden Oberfläche (3) des Grundkörpers (2) eingebrannt wird.

## Claims

1. A bottom block in a tin bath, made of a material from the system Al₂O₃ - SiO₂, consisting of a block-like body (2) having a top surface (3) contacting the tin bath, **characterized in that** the top surface (3) of the block-like body (2) is covered with a coating (13) containing alkali silicate in order to form a separating layer on the top surface (3) of the block-like body (2) adapted for glazing and acting as a capturing material for the sodium from the tin bath due to the decreased offer of Al₂O₃ and the increased offer of alkali and silica in the coating (13) compared to the material of the fireclay refractory brick (1).

2. The bottom block in a tin bath of claim 1, **characterized in that** the coating (13) contains alkali silicate and alumosilicate in fine grain sized form.

3. The bottom block in a tin bath of claim 1 or 2, **characterized in** that the coating (13) contains water glass or a solution of water glass, in particular sodium water glass and/or potassium water glass.

4. The bottom block in a tin bath of one of the claims 1 to 3, **characterized in** that the coating (13) is applied to the top surface (3) of the block-like body (2) in a layer having a thickness as small as possible up to a maximum of 1 mm.

5. The bottom block in a tin bath of claim 2, **characterized in** that in the coating (13) the alkali silicate is applied in an amount of about 50 to 60 % by weight and the alumosilicate in an amount of about 50 to 40 % by weight.

6. The bottom block in a tin bath of one of the claims 1 to 5, **characterized in** that the coating (13) contains SiO₂ in addition to the alkali silicate.

7. The bottom block in a tin bath of claim 6, **characterized in** that the SiO₂ is present in form of silica sol or in form of pyrogenic silica.

8. The bottom block in a tin bath of the claims 2 to 4, **characterized in** that the block-like body (2) comprises a phase (14) covering the top surface (3) contacting the tin bath and that the coating (13) at least extends also across the parts of the side surfaces (4, 5, 6, 7) of the block-like body (2) formed by the phase (14).

9. Method for the production of a bottom block in a tin bath of one or more of the claims 1 to 8, a block being made of a material from the system Al₂O₃ - SiO₂, formed, dried, fired and grinded to the desired dimensions, **characterized in** that after grinding of the block-like body (2) to the desired dimensions a coating (13) containing alkali silicate is applied to the top surface (3) of the block-like body (2) contacting the tin bath.

10. The method of claim 9, **characterized in** that the coating (13) is fixed to the top surface (3) contacting the tin bath by a stove baking operation.

## Revendications

1. Plaque de fond de bain d'étain en un matériau du système Al₂O₃-SiO₂, faite d'un corps de base (2) du type bloc avec une surface (3) venant en contact avec le bain d'étain, caractérisée en ce que la surface (3) venant en contact avec le bain d'étain du corps de base (2) du type bloc présente un revêtement (13) contenant un silicate alcalin, pour former dans le revêtement par comparaison avec le matériau de la brique de chamotte (1), par une proportion réduite de Al₂O₃ et une proportion accrue d'alcalis et d'acide silicique, sur la surface (3) du corps de base (2), une couche de barrage tendant à la vitrification et servant de collecteur pour le Na provenant du bain d'étain.

2. Plaque de fond de bain d'étain selon la revendication 1, caractérisée en ce que le revêtement (13) présente du silicate alcalin et du silicate d'aluminium sous une forme finement répartie.

3. Plaque de fond de bain d'étain selon la revendication 1 ou 2, caractérisée en ce que le revêtement (13) contient du verre soluble ou une solution de verre soluble, en particulier du silicate de soude et/ou du silicate de potassium.

4. Plaque de fond de bain d'étain selon l'une des revendications 1 à 3, caractérisée en ce que le revêtement (13) est appliqué aussi mince que possible, au maximum avec une épaisseur de couche de 1 mm, sur la surface (3) venant en contact avec le bain d'étain du corps de base (2) du type bloc.

5. Plaque de fond de bain d'étain selon la revendication 2, caractérisée en ce que la silicate alcalin est prévu avec une proportion d'environ 50 à 60 % en poids et le silicate d'aluminium avec une proportion de 50 à 40 % en poids dans le revêtement (13).

6. Plaque de fond de bain d'étain selon l'une des revendications 1 à 5, caractérisée en ce que le revêtement (13) contient du SiO₂ en supplément au silicate alcalin.

7. Plaque de fond de bain d'étain selon la revendication 6, caractérisée en ce que le SiO₂ est prévu sous la forme de sol de silice ou d'acide silicique pyrogène.

8. Plaque de fond de bain d'étain selon l'une des revendications 2 à 4, caractérisée en ce que le corps de base (2) du type bloc présente une chanfrein (14), qui est prévu tout autour de la surface (3) venant en contact avec le bain d'étain, et en ce que le revêtement (13) s'étend au moins aussi sur les faces latérales (4, 5, 6, 7) du corps de base (2), formées par le chanfrein.

9. Procédé de fabrication d'une plaque de fond de bain d'étain selon une ou plusieurs des revendications 1 à 8, dans lequel un corps de base (2) du type bloc fait d'un matériau du système Al₂O₃-SiO₂ est formé, séché, cuit et meulé à la cote définitive, caractérisé en ce qu'après le meulage du corps de base (2) à la cote définitive, il est appliqué un revêtement (13) contenant un silicate alcalin sur la surface (3) du corps de base (2), venant en contact avec le bain d'étain.

10. Procédé selon la revendication 9, caractérisé en ce que le revêtement (13) sur la surface (3) du corps de base (2), venant en contact avec le bain d'étain, est cuit.
